# FASCICULE DE BREVET EUROPEEN

(11) **EP 1 140 528 B1**
(45) Date de publication et mention de la délivrance du brevet: **21.01.2009**
(21) Numéro de dépôt: 99972585.6
(22) Date de dépôt: 16.11.1999
(51) Int. Cl.: B60C 17/02

(54) **MEMBRANE DE SOUTIEN DE BANDE DE ROULEMENT**
STÜTZMEMBRAN FÜR LAUFFLÄCHE
SUPPORTING ENVELOPE FOR RUNNING TREAD

(30) Priorité: 20.11.1998 FR 9814695
(43) Date de publication de la demande: 10.10.2001
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: CLOUET, Alain, F-63270 Saint-Maurice (FR)
(74) Mandataire: Diernaz, Christian
(86) Numéro de dépôt international: PCT/EP1999/008792
(87) Numéro de publication internationale: WO 2000/030877

(56) Documents cités:
- DE-A- 2 520 321
- FR-A- 2 370 599
- FR-A- 2 756 221

## Description

L'invention concerne un moyen de support de bande de roulement d'un pneumatique. Ledit moyen de support constitue avec ledit pneumatique et sa jante de montage un ensemble roulant pour véhicule, destiné à pouvoir rouler après une perte de pression conséquente et inattendue du pneumatique, ledit pneumatique étant plus particulièrement un pneumatique sans chambre de type Poids-Lourds ou Génie Civil.

La demande française FR 2 756 221 décrit et revendique, en tant que moyen de support ou de soutien de bande de roulement, une membrane torique en caoutchouc renforcé, gonflée à une pression p₀ supérieure à la pression p₁ de la cavité du pneumatique, et ayant, à l'état gonflé, un rayon de sommet R_{M} inférieur au rayon écrasé R_{E} du pneumatique utilisé à sa pression recommandée, ladite membrane étant au moins en son sommet renforcée par au moins une nappe de fils ou câbles, ledit sommet de ladite membrane comprenant en outre au moins une armature de frettage de fils ou câbles orientés circonférentiellement et présentant une force de rupture par cm de nappe au moins égale au produit du rayon de sommet R_{M} par la pression, par cm² de surface de ladite nappe, conduisant à une tension par cm de nappe équivalente à la tension due à la force centrifuge maximale à laquelle peut être soumis le pneumatique et permettant la rupture des fils ou câbles de frettage pour un différentiel de pression p₀ - p'₁, existant en cas de perte de pression subie par le pneumatique, supérieur au différentiel de pression p₀ - p₁ initial, c'est-à-dire en roulage normal. Ladite armature de frettage peut être composée d'au moins une nappe, située généralement parmi les nappes de renforcement de sommet, ou de plusieurs bandes situées dans les évidements créés sur la couche protectrice ou bande support recouvrant radialement les nappes sous jacentes.

La pression intérieure p₀ de ladite membrane, mesurée à froid, c'est-à-dire à 20°C, est supérieure à la pression p₁ de la cavité interne du pneumatique d'une quantité comprise entre 0,5.10⁵ Pa et 5,0.10⁵ Pa, selon les dimensions de pneumatique concernées. Étant donné que le rayon sommet R_{M} de la membrane torique est préférentiellement compris entre 0,80 et 0,97 fois le rayon écrasé R_{E} du pneumatique, principalement pour des raisons d'échauffement dudit pneumatique, une différence de pression trop forte risque d'altérer un certain nombre de propriétés du pneumatique lui-même, par exemple l'endurance de l'armature de carcasse dudit pneumatique, tout en exigeant une armature de frettage trop importante.

Le sommet de ladite membrane est préférentiellement renforcé par deux nappes de fils ou câbles parallèles entre eux dans chaque nappe et croisés d'une nappe à la suivante en faisant avec la direction circonférentielle un angle compris entre 50° et 85°. Les câbles ou fils sont avantageusement textiles pour des raisons de légèreté, de souplesse et de bonne tenue à la corrosion, et préférentiellement en polyamide aromatique. Les extrémités axiales des deux nappes sont préférentiellement situées sur les flancs de la membrane, de sorte que, si l'on appelle S la largeur axiale maximale de l'armature de carcasse du pneumatique, la largeur des nappes est préférentiellement comprise entre S et 1,30 S.

La différence de pression p₀ - p₁ augmente en cas de crevaison du pneumatique et les câbles de la ou des nappes de frettage se rompent, la membrane de soutien torique s'expand dans la cavité du pneumatique et permet le roulage de l'ensemble malgré la chute de pression dans la cavité du pneumatique.

La membrane torique, conforme à l'invention décrite dans la demande française ci-dessus, peut éventuellement comporter des flancs renforcés chacun par au moins une nappe de fils ou câbles radiaux, lesdits flancs pouvant être pourvues avantageusement de rainures radiales débouchant sur la jante métallique de montage du pneumatique.

Dans les conditions normales de roulage de l'ensemble formé par le pneumatique, sa jante de montage et la membrane, conditions de charge, de pression, et de vitesse recommandées pour le pneumatique concerné, la membrane conserve un rayon équatorial pratiquement constant et inférieur au rayon écrasé du pneumatique, et les parois extérieures de ses flancs sont dans leur très grande partie en contact permanent avec les parois intérieures du pneumatique. Le frottement existant entre lesdites parois engendre une dégradation et une usure prématurées de la couche de gomme imperméable qui recouvre la paroi intérieure du pneumatique.

La demande FR 97/16450, en vue de remédier aux inconvénients cités ci-dessus, propose de conférer à la membrane une architecture particulière de flanc en ce sens que la nappe de renforcement de flanc est enroulée de chaque côté autour d'un élément de renforcement annulaire, dont la constitution permet la rupture après la rupture des nappes de frettage, ladite nappe de renforcement de flanc ayant un profil méridien à l'état gonflé adapté de sorte qu'il n'y ait pas contact entre la membrane et la paroi intérieure du flanc le plus proche à partir d'une certaine hauteur. En d'autres mots, la présence d'un élément annulaire de renforcement permet à l'état gonflé et en roulage normal le maintien du profil méridien désiré de la ou des nappes de renforcement de flanc, tout en n'empêchant pas, lors de la perte de pression dans la cavité du pneumatique l'expansion normale et complète de la membrane de soutien.

La présence d'élément annulaire ou tringle d'enroulement des nappes de renforcement de flancs de la membrane conduit à deux inconvénients majeurs :
- il et difficile pour ne pas dire impossible de maîtriser la position des morceaux de tringle après rupture : en particulier il a été de ce fait très souvent observé une dissymétrie accentuée, par rapport au plan équatorial, du positionnement du sommet de la membrane après expansion, ce qui provoque certains désagréments de conduite du véhicule équipé ;
- la rupture des tringles d'enroulement provoque, dans le cas d'une membrane de soutien dite fermée (la section transversale de ladite membrane présente un contour continu) une forte extension des portions de membrane situées radialement au dessous des dites tringles, d'où rupture des dites portions et fuite du gaz de gonflage de ladite membrane.

Afin de remédier aux inconvénients cités ci-dessus, tout en conservant d'une part le principe d'une membrane torique de soutien expansible et capable de remplir la cavité du pneumatique lorsque la pression de gonflage de ladite cavité décroît et/ou s'annule, et d'autre part le principe de la longueur de contact la plus faible possible entre membrane et paroi intérieure du pneumatique dans le cas du roulage normal, la membrane en caoutchouc renforcé, conforme à l'invention,
- utilisée comme moyen de soutien de bande de roulement d'un pneumatique P, et formant avec ledit pneumatique P et sa jante de montage J, dont le diamètre nominal est Dₛ et dont le rebord a un diamètre extérieur D_{R}, un ensemble roulant pouvant rouler lorsque le pneumatique est sujet à une perte de pression,
- gonflée à une pression p₀ supérieure à la pression p₁ de la cavité du pneumatique,
- et ayant, à l'état gonflé, un rayon de sommet R_{M} inférieur au rayon écrasé R_{E} du pneumatique utilisé à sa pression recommandée, ladite membrane étant,
- en son sommet, renforcée par au moins deux nappes de fils ou câbles parallèles entre eux dans chaque nappe et croisés d'une nappe à la suivante, au moins une des dites nappes étant une nappe dite de frettage composée d'au moins une couche de fils ou câbles, orientés circonférentiellement et présentant une force de rupture par cm de nappe permettant d'une part de résister à la tension due à la force centrifuge maximale à laquelle est soumis le pneumatique, augmentée de la tension due au différentiel de pression p₀ - p₁ existant en roulage normal, et d'autre part la rupture des fils ou câbles pour un différentiel de pression p₀ - p'₁ supérieur à p₀ - p₁, et
- dans chacun de ses flancs renforcée par au moins une nappe,
- est caractérisée en ce que, vue en section méridienne,
- la nappe de renforcement de flanc est ancrée dans chaque partie basse de flanc par enroulement autour d'un élément annulaire de renforcement inextensible, ne rompant pas sous l'effet de la tension induite par l'action de la nappe de flanc et dont le diamètre intérieur D est compris entre la valeur D_{R} et une valeur égale à D_{S} diminuée du produit de la largeur L_{S} du siège de jante par la tangente de l'angle d'inclinaison dudit siège,
- ladite nappe de renforcement de flanc étant constituée d'éléments de renforcement, chaque élément étant composé d'une âme présentant une force de rupture d'une part supérieure à la tension, par élément de nappe, due au différentiel de pression p₀ - p₁ et à la force centrifuge maximale subie par ledit élément, et d'autre part telle qu'elle permet la rupture des dits éléments de nappe de flanc pour un différentiel de pression p₀ - p'₁ supérieur à p₀ - p₁ et après la rupture des éléments de la nappe de frettage,
- ladite âme étant entourée par un fil ou câble enroulé hélicoïdalement,
- et ledit élément de renforcement de nappe de flanc ayant une courbe, représentant la tension en fonction de l'allongement relatif ε, présentant, pour un allongement supérieur à l'allongement de rupture ε_{A} de l'âme, un segment
où la variation de la force de traction en fonction de l'allongement est sensiblement nulle,
- l'allongement à la rupture ε_{R} de l'élément de renforcement étant au moins égal au rapport de la différence entre la longueur méridienne intérieure du pneumatique et la longueur méridienne extérieure de la membrane sur la longueur méridienne extérieure de la membrane.

De manière préférentielle, le diamètre intérieur D de l'élément annulaire de renforcement inextensible est compris entre la valeur D_{S} et la valeur égale à D_{S} diminuée du produit de la largeur L_{S} du siège de jante par la tangente de l'angle d'inclinaison dudit siège.

Le sommet de membrane est dit renforcé par une nappe lorsque la présence de ladite nappe au sommet est effective, quelle que soit la largeur réelle de la nappe. Un flanc de membrane est dit renforcé par une nappe si il y a effectivement une nappe dans le flanc ; ainsi une nappe ancrée aux deux tringles de membrane est nappe de renforcement de flanc mais aussi nappe de renforcement de sommet.

Les caractéristiques et avantages de l'invention seront mieux comprises à l'aide de la description qui suit et qui se réfère au dessin illustrant à titre non limitatif un exemple d'exécution, dessin sur lequel :
- la figure 1 représente schématiquement une membrane torique de soutien conforme à l'invention,
- la figure 2 représente schématiquement la membrane de la figure 1 en position dans le pneumatique monté sur sa jante de service et gonflé,
- la figure 3 représente schématiquement un élément de renforcement utilisé pour la nappe de renforcement de flanc de la membrane,
- la figure 4 représente la courbe donnant la force de tension en fonction de l'allongement relatif d'un élément de renforcement de nappe de renforcement de flanc,
- les figures 5 à 7 représentent schématiquement des variantes de membrane de soutien conformes à l'invention.

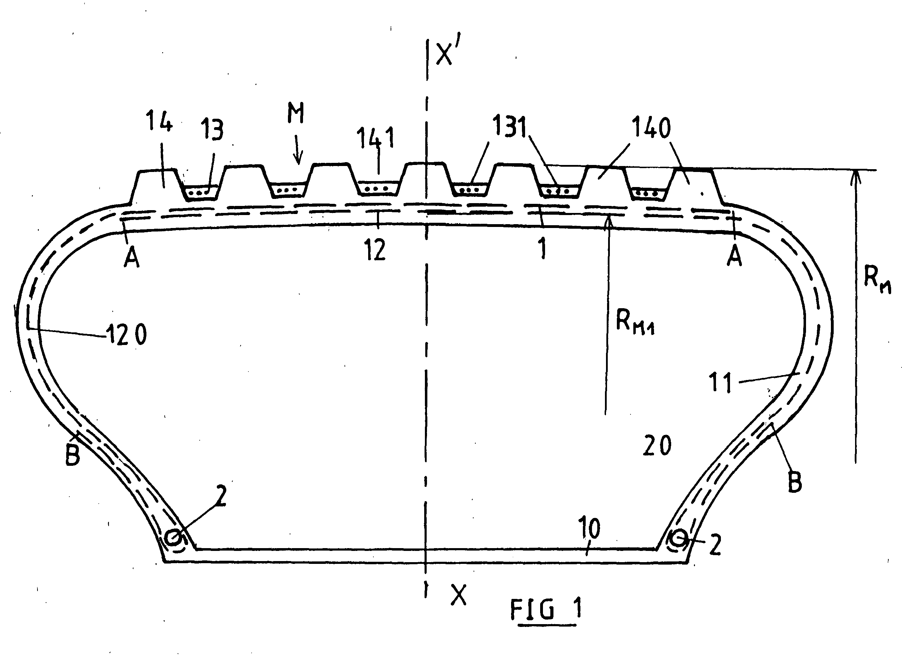

La membrane torique M, conforme à l'invention, est, dans le premier exemple décrit, (figure 1), fermée et renforcée en son sommet (1). D'épaisseur faible et constante sur sa partie radialement intérieure (10), elle est plus épaisse sur ses flancs (11) et au sommet (1). Elle est globalement renforcée par deux nappes (120), chaque nappe étant constituée d'éléments de renforcement, parallèles entre eux dans la nappe, et faisant avec la ligne équatoriale XX' de l'ensemble un angle compris entre 50° et 85°, plus précisément égal à 60°, angle qui sera d'un sens pour l'une des nappes et de sens opposé pour l'autre nappe. La largeur de chacune des deux nappes (120) est telle qu'une de ses extrémités A est située dans la région de l'une des épaules de la membrane M, alors que l'autre extrémité B de ladite nappe (120) est l'extrémité du retournement (20) qu'elle forme après enroulement autour d'un élément de renforcement annulaire (2) dans la partie basse du flanc de membrane située du côté opposé à ladite épaule. Les deux nappes (120) assurent donc, dans la région AA du sommet de la membrane M la fonction de deux nappes de renforcement de sommet d'éléments parallèles entre eux dans chaque portion de nappe et croisés d'une nappe à la suivante en faisant avec la direction équatoriale un angle de 60°, et dans la région AB des flancs la fonction de nappe de renforcement de flanc, chaque flanc étant renforcé par une nappe d'éléments faisant avec la direction équatoriale un angle variable inférieur à 90° et supérieur à l'angle mesuré dans le plan équatorial.

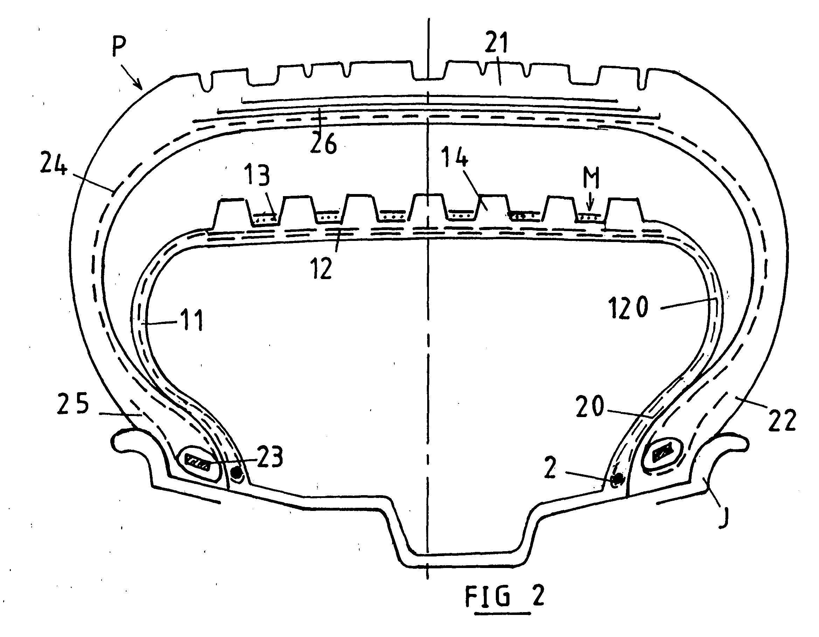

L'ensemble (12) des deux nappes de sommet (120) ainsi formée, facilement expansible, peut être surmontée d'une bande de support caoutchouteuse (14) munie d'éléments en relief tronconiques (140) séparés entre eux par des évidements (141). Ces "plots" tronconiques forment sur la surface de la bande (14) des rangées circonférentielles, de sorte que, entre deux rangées de plots (140) axialement adjacentes, est disposée une bandelette de frettage (I31) de câbles circonférentiels, formés de trois fils de polyamide aromatique. L'ensemble des bandelettes (131) de 3 câbles circonférentiels ainsi définis et formant l'ensemble de frettage (13), leur nombre étant égal au nombre d'intervalles axiaux entre rangées de plots (140), assure la fonction de frettage de la membrane M, frettage d'une part contre les efforts dus à la force centrifuge et d'autre part contre les efforts dus au différentiel de pression p₀ - p₁, p₀ étant la pression de gonflage de la membrane torique M, égale à 10.10⁵ Pa, et p₁ étant la pression du pneumatique P égale à 9,0.10⁵ Pa. Ladite fonction de frettage permet à la membrane M et à ses nappes de sommet de conserver, dans les conditions normales de roulage de l'ensemble, c'est-à-dire dans les conditions de charge, de pression et de vitesse recommandées pour le pneumatique concerné, des rayons respectifs R_{M} et R_{M1} pratiquement constants (figure 2) et inférieurs au rayon R_{E} écrasé du pneumatique P dans des conditions normales de roulage.

Chaque élément annulaire de renforcement (2) est formé par l'enroulement de câbles en polyamide aromatique 167x2. Une telle composition confère audit élément annulaire une extensibilité presque parfaite et une résistance à la rupture au moins égale à 1,05 fois la résistance nécessaire induite par la tension exercée sur l'élément annulaire des éléments de renforcement de la nappe de flanc : ainsi l'élément annulaire (2) peut être dans les conditions citées qualifié d'inextensible et incassable. Ledit élément annulaire est disposé radialement le plus près possible de la jante de montage du pneumatique, et, dans le cas montré, son diamètre intérieur est compris entre le diamètre nominal de la jante D_{S} et la valeur D_{S} diminuée du produit L_{S} . tg δ, L_{S} étant la largeur axiale du siège de bourrelet de pneumatique et tgδ la tangente de l'angle d'inclinaison du siège de la jante de montage.

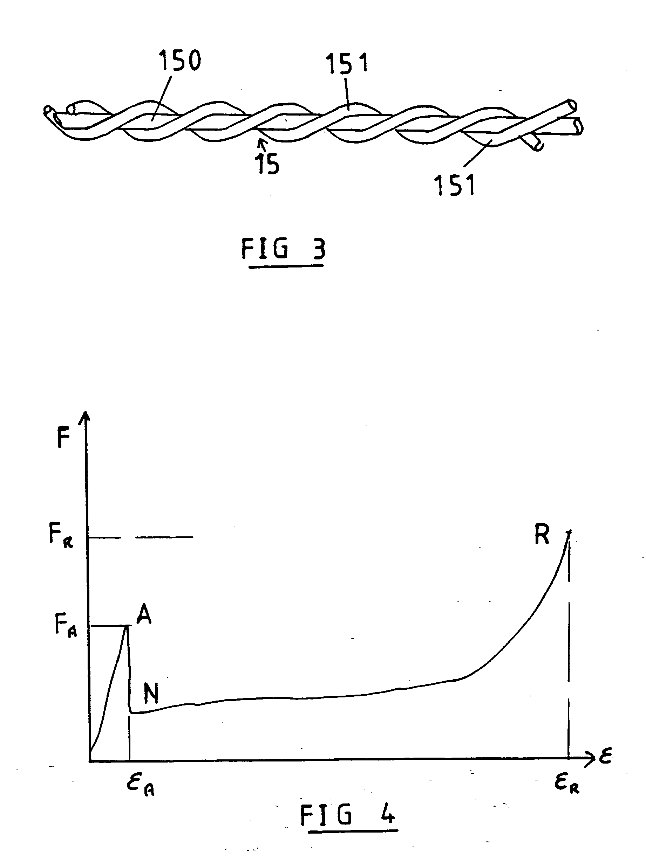

Chaque élément de renforcement (15) de nappe (120) de renforcement de flanc et de sommet (figure 3) est constitué d'une âme (150), elle-même formée d'un élément de renforcement en rayonne 122x1. Ladite âme présente (figure 4) une force de rupture F_{RA} égale à 6,2 daN pour un allongement relatif ε_{A} de 7,5 % (point M de la courbe représentant la force en fonction de l'allongement relatif). Autour de ladite âme sont enroulés des fils (151) de 167 tex, chaque fil (151) étant torsadé sur lui-même et les deux fils (151) étant torsadés autour de l'âme (150). L'élément de renforcement (15) ainsi obtenu, et dit à âme cassante, présente un allongement à la rupture ε_{R} égal à 90 % (point R de la courbe), qui est très supérieur à l'allongement ε_{A} à la rupture de l'âme (150) : après rupture de ladite âme, l'élément de renforcement (15) présente donc un potentiel élevé d'allongement avant sa propre rupture portion NR de la courbe), potentiel estimé à plus de 80 %. Ledit potentiel est très largement suffisant pour permettre une expansion complète de la membrane jusqu'à remplir la cavité pneumatique, puisque l'allongement nécessaire et suffisant est égal au rapport de la différence entre la longueur méridienne intérieure du pneumatique et la longueur méridienne extérieure de la membrane sur la longueur méridienne extérieure de la membrane, lesdites longueurs étant mesurées de tringle à tringle.

Dans le cas étudié précédemment, les éléments de renforcement circonférentiels des bandes de frettage (131) se rompent pour une certaine différence de pression p₀ - p'₁. Il est évident que l'on ne sort pas du cadre de l'invention en employant comme éléments de renforcement des bandes de frettage des éléments de renforcement présentant une structure semblable à celle des éléments (15) utilisés pour les nappes (120). Par exemple, chaque élément de frettage sera constitué d'une âme en polyamide aromatique 110x1, et enroulés autour de ladite âme de deux câbles en polyamide aromatique 167x2. L'âme de l'élément de frettage se rompt alors pour la tension supportée qui résulte de l'abaissement de la pression p₁, alors que l'élément global n'est pas rompu quoique devenu très extensible. La solution permet d'éviter au maximum la dispersion des morceaux de bandes après rupture de ces dernières, au prix cependant d'un coût en matière nettement plus élevé.

Sur la figure 2, l'ensemble E est composé du pneumatique P, de dimension 495/45-R-22.5 dans l'exemple décrit, de la jante de montage J, et de la membrane torique M conforme à l'invention. Le pneumatique P est un pneumatique universellement connu, avec des flancs réunis radialement à l'extérieur à une bande de roulement (21) et prolongés radialement à l'intérieur à deux bourrelets (22), chaque bourrelet (22) étant renforcé par au moins une tringle (23) autour de laquelle vient s'ancrer une armature de carcasse radiale (24) pour former des retournements (25). Ladite armature de carcasse (24) est surmontée radialement dans le sommet par une armature de sommet (26), composée d'au moins deux nappes de fils ou câbles métalliques parallèles entre eux dans chaque nappe et croisés d'une nappe à la suivante en faisant avec la direction circonférentielle un angle pouvant être compris entre 5° et 45°. Le pneumatique P est dit sans chambre, et comprend intérieurement une couche de mélange de caoutchouc imperméable aux gaz de gonflage.

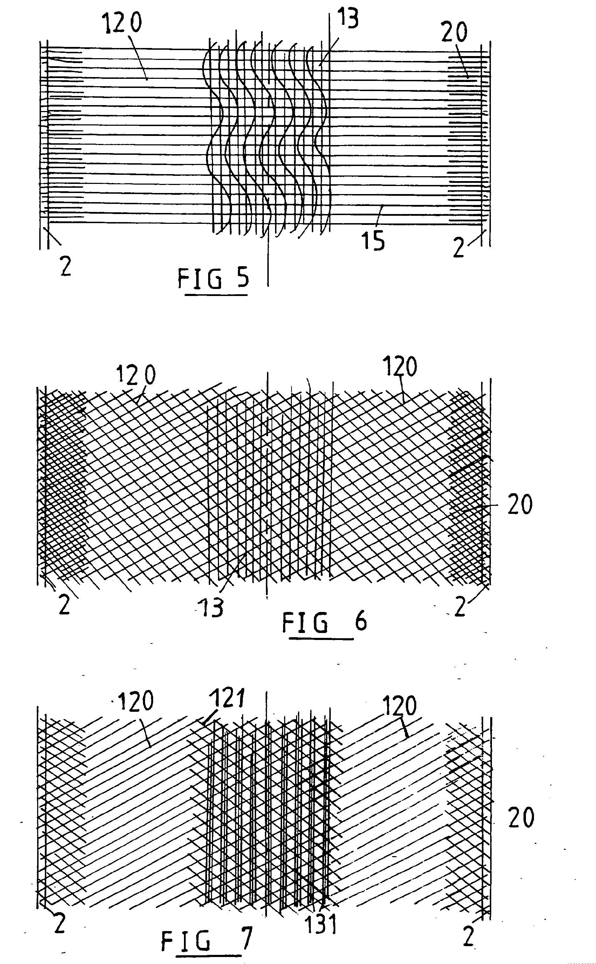

La figure 5 montre l'architecture de membrane de soutien la plus simple, le sommet et les flancs de ladite membrane étant vus sur plan. Les flancs (11) sont renforcés par une seule nappe radiale (120) d'éléments de renforcement (15) à âme cassante de même constitution que ceux décrits précédemment mais radiaux. Ladite nappe radiale est aussi nappe de sommet puisque continue axialement de tringle (2) à tringle (2) de membrane M. Le sommet (1) de ladite membrane est complémentairement renforcé par une nappe de frettage (13) disposée radialement au dessous de la bande de support (14), ladite nappe de frettage étant formée d'éléments de renforcement de sorte que la force de rupture par cm de nappe est une fonction linéaire de la pression de gonflage p₁ de la cavité du pneumatique, le coefficient angulaire de la droite représentative étant égal à 0,05 et l'ordonnée à l'origine de ladite droite étant égale à 0,3.10⁵ Pa, le pneumatique concerné étant un pneumatique "Poids-Lourds". On complétera avantageusement le sommet, radialement à l'extérieur de la nappe de frettage, par au moins une nappe d'éléments de renforcement métalliques ondulés dans le plan de la nappe, parallèles entre eux dans la nappe et orientés par rapport à la direction circonférentielle avec un angle pouvant être compris entre 0° et 90°, l'amplitude et la longueur d'onde des ondulations étant de manière évidente choisies de manière à ne pas entraver l'expansion radiale de la membrane. -

Sur la figure 6 est montrée une architecture de membrane à deux nappes (120) continues de tringle (2)à tringle (2), formées d'éléments de renforcement (15) à âme cassante de même constitution que ceux décrits précédemment, mais croisés d'une nappe à la suivante en faisant avec la direction circonférentielle un angle, mesuré dans le plan équatorial de la membrane, compris entre 50° et 85° , et plus précisément égal à 60°. Les deux nappes (120) sont nappes de renforcement de flancs et nappes de renforcement de sommet, le sommet étant complémentairement renforcé par une nappe de frettage (13) telle que celle montrée sur la figure 5 et décrite précédemment.

L'architecture, montrée sur la figure 7, comprend une nappe (120) de renforcement flanc et sommet, car continue de tringle (2) à tringle (2), ladite nappe (120) étant formée des mêmes éléments à âme cassante que précédemment, lesdits éléments étant parallèles entre eux dans la nappe et faisant avec la direction circonférentielle un angle de 60° (mais pouvant être compris entre 50° et 85°), mesuré au sommet de la membrane. La nappe (120) est dans le sommet surmontée radialement d'une nappe de sommet (121) de largeur axiale définie et composée des mêmes éléments de renforcement que ceux de la nappe (120), mais croisés avec ces derniers en faisant avec la direction circonférentielle le même angle, mais de direction opposée. La nappe (121) peut être radialement surmontée de la bande de support (14) munie d'éléments en relief tronconiques (140) séparés entre eux par les évidements (141). Ces "plots" tronconiques forment sur la surface de la bande (14) des rangées circonférentielles, de sorte que, entre deux rangées de plots (140) axialement adjacentes, est disposée une bandelette de frettage (131) de câbles circonférentiels, dont l'ensemble forme la nappe de frettage (13). La nappe (121) peut aussi être surmontée plus simplement d'une nappe de frettage telle que celle montrée sur la figure 5 et décrite dans le passage correspondant à ladite figure.

## Revendications

1. Membrane M en caoutchouc renforcé,
- utilisée comme moyen de soutien de bande de roulement d'un pneumatique P, et formant avec ledit pneumatique P et sa jante de montage J, dont le diamètre nominal est D_{S} et dont le rebord a un diamètre extérieur D_{R}, un ensemble roulant pouvant rouler lorsque le pneumatique est sujet à une perte de pression,
- gonflée à une pression p₀ supérieure à la pression p₁ de la cavité du pneumatique,
- et ayant, à l'état gonflé, un rayon de sommet R_{M} inférieur au rayon écrasé R_{E} du pneumatique utilisé à sa pression recommandée, ladite membrane étant,
- en son sommet (1), renforcée par au moins deux nappes de fils ou câbles parallèles entre eux dans chaque nappe et croisés d'une nappe à la suivante, au moins une des dites nappes étant une nappe (13) dite de frettage composée d'au moins une couche de fils ou câbles, orientés circonférentiellement et présentant une force de rupture par cm de nappe permettant d'une part de résister à la tension due à la force centrifuge maximale à laquelle est soumis le pneumatique, augmentée de la tension due au différentiel de pression p₀ - p₁ existant en roulage normal, et d'autre part la rupture des fils ou câbles pour un différentiel de pression p₀ - p'₁ supérieur à p₀ - p_{1,} et
- dans chacun de ses flancs renforcée par au moins une nappe (120),
- est **caractérisée en ce que**, vue en section méridienne,
- la nappe (120) de renforcement de flanc est ancrée dans chaque partie basse de flanc par enroulement autour d'un élément annulaire de renforcement (2) inextensible, ne rompant pas sous l'effet de la tension induite par l'action de la nappe de flanc (120) et dont le diamètre intérieur D est compris entre la valeur D_{R} et une valeur égale à D_{S} diminuée du produit de la largeur L_{S} du siège de jante par la tangente de l'angle d'inclinaison dudit siège,
- ladite nappe (120) de renforcement de flanc étant constituée d'éléments de renforcement (15), chaque élément (15) comprenant une âme (150) et un fil ou câble (151) enroulé hélicoïdalement autour, ladite âme présentant une force de rupture d'une part supérieure à la tension, par élément de nappe, due au différentiel de pression p₀ - p₁ et à la force centrifuge maximale subie par ledit élément (15), et d'autre part telle qu'elle permet la rupture des dits éléments (15) de nappe de flanc (120) pour un différentiel de pression p₀ - p'₁ supérieur à p₀ - p₁ et après la rupture des éléments de la nappe de frettage (13),
- et ledit élément de renforcement (15) de nappe de flanc (120) ayant une - courbe, représentant la tension en fonction de l'allongement relatif ε, présentant, pour un allongement supérieur à l'allongement de rupture ε_{A} de l'âme, un segment où la variation de la force de traction en fonction de l'allongement est sensiblement nulle,
- l'allongement à la rupture ε_{R} de l'élément de renforcement (15) étant au moins égal au rapport de la différence entre la longueur méridienne intérieure du pneumatique et la longueur méridienne extérieure de la membrane sur la longueur méridienne extérieure de la membrane.

2. Membrane M selon la revendication 1, **caractérisée en ce que** le diamètre intérieur D de l'élément annulaire de renforcement (2) inextensible est compris entre la valeur D_{S} et la valeur égale à D_{S} diminuée du produit de la largeur L_{S} du siège de jante par la tangente de l'angle d'inclinaison dudit siège.

3. Membrane M selon la revendication 2, **caractérisée en ce que** les éléments de renforcement de la (des) nappe(s) de renforcement de sommet et/ou de frettage sont aussi constituées d'éléments de renforcement à âme cassante.

4. Membrane M selon l'une des revendications 1 à 3, **caractérisée en ce qu'**elle est globalement renforcée par deux nappes (120), chaque nappe étant constituée d'éléments de renforcement (15) à âme cassante parallèles entre eux dans la nappe, et croisés d'une nappe à la suivante, chaque nappe ayant une largeur telle qu'une de ses extrémités A est située dans la région de l'une des épaules de la membrane M, alors que l'autre extrémité B de ladite nappe (120) est l'extrémité du retournement (20) qu'elle forme après enroulement autour d'un élément de renforcement annulaire (2) dans la partie basse du flanc de membrane située du côté opposé à ladite épaule, les deux nappes (120) assurant, dans la région AA du sommet de la membrane M la fonction de nappes de renforcement de sommet d'éléments parallèles entre eux dans chaque portion de nappe et croisés d'une nappe à la suivante en faisant avec la direction circonférentielle un angle compris entre 50° et 85°, mesuré dans le plan équatorial, et dans la région AB des flancs la fonction de nappe de renforcement de flanc, chaque flanc étant renforcé par une nappe d'éléments faisant avec la direction équatoriale un angle d'au plus de 90° mais supérieur à l'angle mesuré dans le plan équatorial, et le renforcement du sommet étant complété par des bandes de frettage (13) d'éléments de renforcement orientés circonférentiellement.

5. Membrane M selon l'une revendications 1 à 3, **caractérisée en ce qu'**elle est globalement renforcée par une nappe (120) d'éléments radiaux (15) à âme cassante, continue axialement de tringle (2) à tringle (2), surmontée radialement au sommet de ladite membrane d'une nappe de frettage (13), formée d'éléments de renforcement de sorte que la force de rupture par cm de nappe (13) est une fonction linéaire de la pression de gonflage p₁ de la cavité du pneumatique, le coefficient angulaire de la droite représentative étant égal à 0,05 et l'ordonnée à l'origine de ladite droite étant égale à 0 3.10⁵ Pa.

6. Membrane M selon l'une des revendications 1 à 3, **caractérisée en ce qu'**elle est globalement renforcée par deux nappes (120) continues de tringle (2) à tringle (2), formées d'éléments de renforcement (15) à âme cassante, croisés d'une nappe à la suivante en faisant avec la direction circonférentielle un angle, mesuré dans le plan équatorial de la membrane, compris entre 50° et 85°, lesdites deux nappes (120) étant nappes de renforcement de flancs et nappes de renforcement de sommet, le sommet étant complémentairement renforcé par une nappe de frettage (13), formée d'éléments de renforcement de sorte que la force de rupture par cm de nappe (13) est une fonction linéaire de la pression de gonflage p₁ de la cavité du pneumatique, le coefficient angulaire de la droite représentative étant égal à 0,05 et l'ordonnée à l'origine de-ladite droite étant égale à 0,3.10⁵ Pa.

7. Membrane M selon l'une des revendications 1 à 3, **caractérisée en ce qu'**elle est globalement renforcée par une nappe (120) de renforcement, continue de tringle (2) à tringle (2), ladite nappe (120) étant formée d'éléments de renforcement à âme cassante, lesdits éléments étant parallèles entre eux dans la nappe et faisant avec la direction circonférentielle un angle compris entre 50° et 85°, mesuré dans le plan équatorial de la membrane, ladite nappe (120) étant, dans le sommet, surmontée radialement d'une nappe de sommet (121) de largeur axiale définie et composée des mêmes éléments de renforcement que ceux de la nappe (120), mais croisés avec ces derniers en faisant avec la direction circonférentielle le même angle en valeur absolue, ladite nappe (121) étant elle-même radialement surmontée d'une bande de support (14) munie d'éléments en relief tronconiques (140) séparés entre eux par des rangées circonférentielles (141) dans lesquelles sont disposées des bandelettes de frettage (131) de câbles circonférentiels, dont l'ensemble forme la nappe de frettage (13).

8. Membrane M selon la revendication 7, **caractérisée en ce que** la nappe (121) est elle-même radialement surmontée d'une bande de support (14) munie d'éléments en relief tronconiques (140) séparés entre eux par des rangées circonférentielles (141) dans lesquelles sont disposées des bandelettes de frettage (131) de câbles circonférentiels, dont l'ensemble forme la nappe de frettage (13).

9. Membrane selon la revendication 7, **caractérisée en ce que** la nappe (121) est surmontée d'une nappe de frettage (13) disposée radialement au dessous de la bande de support (14), ladite nappe de frettage étant formée d'éléments de renforcement de sorte que la force de rupture par cm de nappe est une fonction linéaire de la pression de gonflage p₁ de la cavité du pneumatique, le coefficient angulaire de la droite représentative étant égal à 0,05 et l'ordonnée à l'origine de ladite droite étant égale à 0,3.10⁵ Pa.

10. Membrane M selon l'une des revendications 4 à 9, **caractérisée en ce qu'**au moins une nappe d'éléments de renforcement ondulés dans le plan de la nappe complète le renforcement du sommet de ladite membrane.

## Claims

1. A reinforced rubber membrane M,
- used as a tread support means for a tyre P, and forming with said tyre P and its mounting rim J, the nominal diameter of which is D_{S} and the flange of which has an external diameter D_{R}, a travelling assembly which is capable of travel when the tyre is subject to a loss of pressure,
- inflated to a pressure p₀ greater than the pressure p₁ of the cavity of the tyre,
- and having, in the inflated state, a crown radius R_{M} less than the loaded radius R_{E} of the tyre used at its recommended pressure, said membrane being
- in its crown (1), reinforced by at least two plies of cords or cables parallel to each other in each ply and crossed from one ply to the next, at least one of said plies being a so-called hooping ply (13) composed of at least one layer of cords or cables, oriented circumferentially and having a breaking load per cm of ply making it possible firstly to resist the tension due to the maximum centrifugal force to which the tyre is subjected, increased by the tension due to the pressure differential p₀ - p₁ existing during normal travel, and secondly the breaking of the cords or cables for a pressure differential p₀ - p'₁ greater than p₀ - p₁, and
- reinforced in each of its sidewalls by at least one ply (120),
- is **characterised in that**, viewed in meridian section,
- the sidewall reinforcement ply (120) is anchored in each lower part of the sidewall by winding around an inextensible annular reinforcement element (2), which does not break under the action of the tension induced by the action of the sidewall ply (120) and the internal diameter D of which is between the value D_{R} and a value equal to D_{S} minus the product of the width L_{S} of the rim seat and the tangent of the angle of inclination of said seat,
- said sidewall reinforcement ply (120) being formed of reinforcement elements (15), each element (15) being composed of a core (150) having a breaking load which is firstly greater than the tension, per element of ply, due to the pressure differential p₀ - p₁ and to the maximum centrifugal force to which said element (15) is subjected, and secondly such that it permits the breaking of said elements (15) of the sidewall ply (120) for a pressure differential p₀ - p'₁ greater than p₀ - p₁ and after the breaking of the elements of the hooping ply (13),
- said core (150) being surrounded by a helically wound cord or cable (151),
- and said reinforcement element (15) of the sidewall ply (120) having a curve, representing the tension as a function of the relative elongation ε, having, for an elongation greater than the elongation at break ε_{A} of the core, a segment in which the variation in the tractive force as a function of the elongation is substantially zero,
- the elongation at break ε_{R} of the reinforcement element (15) being at least equal to the ratio of the difference between the internal meridian length of the tyre and the external meridian length of the membrane to the external meridian length of the membrane.

2. A membrane M according to Claim 1, **characterised in that** the internal diameter D of the inextensible annular reinforcement element (2) lies between the value D_{S} and the value equal to D_{S} minus the product of the width L_{S} of the rim seat and the tangent of the angle of inclination of said seat.

3. A membrane M according to Claim 2, **characterised in that** the reinforcement elements of the crown and/or hooping reinforcement ply (plies) are also formed of breaking-core reinforcement elements.

4. A membrane M according to one of Claims 1 to 3, **characterised in that** it is reinforced overall by two plies (120), each ply being formed of breaking-core reinforcement elements (15) which are parallel to each other in the ply, and crossed from one ply to the next, each ply having a width such that one of its ends A is located in the region of one of the shoulders of the membrane M, whereas the other end B of said ply (120) is the end of the upturn (20) which it forms after winding around an annular reinforcement element (2) in the lower part of the membrane sidewall located on the opposite side to said shoulder, the two plies (120), in the region AA of the crown of the membrane M, performing the function of crown reinforcement plies of elements which are parallel to each other in each portion of ply and crossed from one ply to the next, forming an angle of between 50° and 85°, measured in the equatorial plane, with the circumferential direction, and in the region AB of the sidewalls performing the function of a sidewall reinforcement ply, each sidewall being reinforced by a ply of elements forming with the equatorial direction an angle of at most 90° but greater than the angle measured in the equatorial plane, and the reinforcement of the crown being completed by hooping bands (13) of reinforcement elements oriented circumferentially.

5. A membrane M according to one of Claims 1 to 3, **characterised in that** it is reinforced overall by a ply (120) of radial breaking-core elements (15) which are axially continuous from bead wire (2) to bead wire (2), surmounted radially to the crown of said membrane by a hooping ply (13), formed of reinforcement elements such that the breaking load per cm of ply (13) is a linear function of the inflation pressure p₁ of the cavity of the tyre, the angular coefficient of the representative straight line being equal to 0.05 and the ordinate at the origin of said straight line being equal to 0.3 x 10⁵ Pa.

6. A membrane M according to one of Claims 1 to 3, **characterised in that** it is reinforced overall by two plies (120) which are continuous from bead wire (2) to bead wire (2), formed of breaking-core reinforcement elements (15) crossed from one ply to the next, forming with the circumferential direction an angle, measured in the equatorial plane of the membrane, of between 50° and 85°, said two plies (120) being sidewall reinforcement plies and crown reinforcement plies, the crown being complementarily reinforced by a hooping ply (13) formed of reinforcement elements such that the breaking load per cm of ply (13) is a linear function of the inflation pressure p₁ of the cavity of the tyre, the angular coefficient of the representative straight line being equal to 0.05 and the ordinate at the origin of said straight line being equal to 0.3 x 10⁵ Pa.

7. A membrane M according to one of Claims 1 to 3, **characterised in that** it is reinforced overall by a reinforcement ply (120), which is continuous from bead wire (2) to bead wire (2), said ply (120) being formed of breaking-core reinforcement elements, said elements being parallel to each other in the ply and forming an angle of between 50° and 85° with the circumferential direction, measured in the equatorial plane of the membrane, said ply (120), in the crown, being surmounted radially by a crown ply (121) of defined axial width composed of the same reinforcement elements as those of the ply (120), but crossed with the latter, forming the same angle in absolute value with the circumferential direction, said ply (121) itself being radially surmounted by a support band (14) provided with frustoconical elements in relief (140) which are spaced apart by circumferential rows (141) in which there are arranged hooping strips (131) of circumferential cables, the assembly of which forms the hooping ply (13).

8. A membrane M according to Claim 7, **characterised in that** the ply (121) is itself radially surmounted by a support band (14) provided with frustoconical elements in relief (140) which are spaced apart by circumferential rows (141) in which there are arranged hooping strips (131) of circumferential cables, the assembly of which forms the hooping ply (13).

9. A membrane according to Claim 7, **characterised in that** the ply (121) is surmounted by a hooping ply (13) arranged radially beneath the support band (14), said hooping ply being formed of reinforcement elements such that the breaking load per cm of ply is a linear function of the inflation pressure p₁ of the cavity of the tyre, the angular coefficient of the representative straight line being equal to 0.05 and the ordinate at the origin of said straight line being equal to 0.3 x 10⁵ Pa.

10. A membrane M according to one of Claims 4 to 9, **characterised in that** at least one ply of reinforcement elements which undulate in the plane of the ply completes the crown reinforcement of said membrane.

## Patentansprüche

1. Membran M aus verstärktem Kautschuk,
- die als Stützeinrichtung für die Lauffläche eines Luftreifens P verwendet wird und mit dem Luftreifen P und seiner Montagefelge J, deren Nenndurchmesser D_{S} ist und deren Rand einen Außendurchmesser D_{R} hat, eine rollende Einheit bildet, die rollen kann, wenn der Luftreifen einen Druckverlust erfährt,
- die auf einen Druck p₀ höher als der Druck p₁ des Hohlraums des Luftreifens aufgepumpt ist,
- und die im aufgepumpten Zustand einen geringeren Scheitelradius R_{M} als der zusammengedrückte Radius R_{E} des Luftreifens hat, der mit seinem empfohlenen Druck benutzt wird, wobei die Membran
- an ihrem Scheitel (1) von mindestens zwei Lagen von zueinander in jeder Lage parallelen und sich von einer Lage zur nächsten kreuzenden Fäden oder Korden verstärkt wird, wobei mindestens eine der Lagen eine so genannte Bandagierungslage (13) ist, die aus mindestens einer Schicht von Fäden oder Korden besteht, die in Umfangsrichtung ausgerichtet sind und eine Bruchkraft pro cm Lage haben, die es einerseits ermöglicht, der Spannung aufgrund der maximalen Zentrifugalkraft, der der Luftreifen ausgesetzt ist, erhöht durch die Spannung aufgrund des beim normalen Rollen vorhandenen Druckdifferentials p₀ - p₁, zu widerstehen, und andererseits den Bruch der Fäden oder Korde bei einem Druckdifferential p₀ - p'₁ größer als p₀ - p₁ erlaubt, und
- in jeder ihrer Flanken durch mindestens eine Lage (120) verstärkt ist,
- **dadurch gekennzeichnet ist, dass** im Meridianschnitt gesehen
- die Flankenverstärkungslage (120) in jedem unteren Flankenbereich durch Wickeln um ein nicht dehnbares, ringförmiges Verstärkungselement (2) verankert ist, das nicht unter der Wirkung der Spannung reißt, die durch die Einwirkung der Flankenlage (120) induziert wird, und dessen Innendurchmesser D zwischen dem Wert D_{R} und einem Wert gleich D_{S} verringert um das Produkt der Breite L_{S} des Felgensitzes mit der Tangente des Neigungswinkels des Sitzes liegt,
- wobei die Flankenverstärkungslage (120) aus Verstärkungselementen (15) besteht, wobei jedes Element (15) einen Kern (150) und einen Faden oder Kord (151) aufweist, der spiralförmig um den Kern gewickelt ist, wobei der Kern eine Bruchkraft hat, die einerseits größer ist als die Spannung pro Lagenelement aufgrund des Druckdifferentials p₀ - p₁ und der maximalen Zentrifugalkraft, die das Element (15) erfährt, und andererseits derart ist, dass sie das Brechen der Elemente (15) der Flankenlage (120) für ein Druckdifferential p₀ - p'₁ größer als p₀ - p₁ und nach dem Brechen der Elemente der Bandagierungslage (13) erlaubt,
- und wobei das Verstärkungselement (15) der Flankenlage (120) eine Kurve hat, die die Spannung in Abhängigkeit von der relativen Dehnung ε darstellt, die für eine Dehnung größer als die Bruchdehnung ε_{A} des Kerns ein Segment aufweist, in dem die Veränderung der Zugkraft in Abhängigkeit von der Dehnung im Wesentlichen gleich Null ist,
- wobei die Bruchdehnung ε_{R} des Verstärkungselements (15) mindestens gleich dem Verhältnis des Unterschieds zwischen der inneren Meridianlänge des Luftreifens und der äußeren Meridianlänge der Membran zur äußeren Meridianlänge der Membran ist.

2. Membran M nach Anspruch 1, **dadurch gekennzeichnet, dass** der Innendurchmesser D des nicht dehnbaren ringförmigen Verstärkungselements (2) zwischen dem Wert D_{S} und dem Wert gleich D_{S} verringert um das Produkt der Breite L_{S} des Felgensitzes mit der Tangente des Neigungswinkels des Sitzes enthalten ist.

3. Membran M nach Anspruch 2, **dadurch gekennzeichnet, dass** die Verstärkungselemente der Scheitelverstärkungslage(n) und/oder der Bandagierungslage(n) auch aus Verstärkungselementen mit brüchigem Kern bestehen.

4. Membran M nach einem der Ansprüche 1 bis 3, **dadurch gekennzeichnet, dass** sie global durch zwei Lagen (120) verstärkt wird, wobei jede Lage aus Verstärkungselementen (15) mit brüchigem Kern besteht, die in der Lage zueinander parallel sind und sich von einer Lage zur anderen kreuzen, wobei jede Lage eine solche Breite hat, dass eines ihrer Enden A sich in dem Bereich einer der Schultern der Membran M befindet, während das andere Ende B der Lage (120) das Ende des Umschlags (20) ist, den sie nach dem Wickeln um ein ringförmiges Verstärkungselement (2) im unteren Bereich der Membranflanke bildet, der sich auf der der Schulter entgegengesetzten Seite befindet, wobei die zwei Lagen (120) in der Zone AA des Scheitels der Membran M die Funktion von Scheitelverstärkungslagen von in jedem Scheitelabschnitt zueinander parallelen und sich von einer Lage zur anderen kreuzenden Elementen, indem sie mit der Umfangsrichtung einen Winkel zwischen 50° und 85° bilden, gemessen in der Äquatorialebene, und in der Zone AB der Flanken die Funktion einer Flankenverstärkungslage gewährleisten, wobei jede Flanke durch eine Lage von Elementen verstärkt wird, die mit der Äquatorialrichtung einen Winkel von höchstens 90°, aber größer als der Winkel bildet, der in der Äquatorialebene gemessen wird, und die Scheitelverstärkung vervollständigt wird durch Bandagierungsbänder (13) von Verstärkungselementen, die in Umfangsrichtung ausgerichtet sind.

5. Membran M nach einem der Ansprüche 1 bis 3, **dadurch gekennzeichnet, dass** sie global von einer axial von Wulstkern (2) zu Wulstkern (2) durchgehenden Lage (120) von radialen Elementen (15) mit brüchigem Kern verstärkt wird, über der radial am Scheitel der Membran eine Bandagierungslage (13) liegt, die von Verstärkungselementen gebildet wird, so dass die Bruchkraft pro cm Lage (13) eine lineare Funktion des Aufpumpdrucks p₁ des Hohlraums des Luftreifens ist, wobei der Winkelkoeffizient der repräsentativen Geraden gleich 0,05 und die Ordinate am Ursprung der Geraden gleich 0,3·10⁵ Pa ist.

6. Membran M nach einem der Ansprüche 1 bis 3, **dadurch gekennzeichnet, dass** sie global von zwei von Wulstkern (2) zu Wulstkern (2) durchgehenden Lagen (120) verstärkt wird, die von Verstärkungselementen (15) mit brüchigem Kern gebildet werden, die sich von einer Lage zur nächsten kreuzen, indem sie mit der Umfangsrichtung einen Winkel bilden, der gemessen in der Äquatorialebene der Membran zwischen 50° und 85° liegt, wobei die zwei Lagen (120) Flankenverstärkungslagen und Scheitelverstärkungslagen sind, wobei der Scheitel komplementär durch eine Bandagierungslage (13) verstärkt wird, die von Verstärkungselementen gebildet wird, so dass die Bruchkraft pro cm Lage (13) eine lineare Funktion des Aufpumpdrucks p₁ des Hohlraums des Luftreifens ist, wobei der Winkelkoeffizient der repräsentativen Geraden gleich 0,05 und die Ordinate am Ursprung der Geraden gleich 0,3·10⁵ Pa ist.

7. Membran M nach einem der Ansprüche 1 bis 3, **dadurch gekennzeichnet, dass** sie global von einer von Wulstkern (2) zu Wulstkern (2) durchgehenden Verstärkungslage (120) verstärkt wird, wobei die Lage (120) von Verstärkungselementen mit brüchigem Kern gebildet wird, wobei die Elemente in der Lage parallel zueinander sind und mit der Umfangsrichtung einen Winkel zwischen 50° und 85° bilden, gemessen in der Äquatorialebene der Membran, wobei über der Lage (120) im Scheitel radial eine Scheitellage (121) mit definierter axialer Breite liegt, die aus den gleichen Verstärkungselementen wie diejenigen der Lage (120) besteht, die sich mit diesen letzteren aber kreuzen, indem sie mit der Umfangsrichtung den gleichen Winkel im Absolutwert bilden, wobei über der Lage (121) selbst radial ein Stützband (14) liegt, das mit kegelstumpfförmigen Reliefelementen (140) versehen ist, die voneinander durch Umfangsreihen (141) getrennt sind, in denen Bandagierungsbändchen (131) von Umfangskorden liegen, deren Gesamtheit die Bandagierungslage (13) bildet.

8. Membran M nach Anspruch 7, **dadurch gekennzeichnet, dass** über der Lage (121) selbst radial ein Stützband (14) liegt, das mit kegelstumpfförmigen Reliefelementen (140) versehen ist, die voneinander durch Umfangsreihen (141) getrennt sind, in denen Bandagierungsbändchen (131) von Umfangskorden angeordnet sind, deren Gesamtheit die Bandagierungslage (13) bildet.

9. Membran nach Anspruch 7, **dadurch gekennzeichnet, dass** über der Lage (121) eine Bandagierungslage (13) liegt, die radial unter dem Stützband (14) angeordnet ist, wobei die Bandagierungslage von Verstärkungselementen derart gebildet wird, dass die Bruchkraft pro cm Lage eine lineare Funktion des Aufpumpdrucks p₁ des Hohlraums des Luftreifens ist, wobei der Winkelkoeffizient der repräsentativen Geraden gleich 0,05 und die Ordinate am Ursprung der Geraden gleich 0,3·10⁵ Pa ist.

10. Membran M nach einem der Ansprüche 4 bis 9, **dadurch gekennzeichnet, dass** mindestens eine Lage von in der Ebene der Lage gewellten Verstärkungselementen die Verstärkung des Scheitels der Membran vervollständigt.
